# EUROPÄISCHE PATENTSCHRIFT

(11) **EP 2 115 307 B1**
(45) Veröffentlichungstag und Bekanntmachung des Hinweises auf die Patenterteilung: **08.10.2014**
(21) Anmeldenummer: 08700913.0
(22) Anmeldetag: 30.01.2008
(51) Int. Cl.: F16B 7/18, F16K 31/00, F16L 15/00, F16L 19/00, F24D 19/02, F24H 9/12

(54) **VERBINDUNGSANORDNUNG ZUM VERBINDEN EINES ERSTEN ELEMENTS MIT EINEM ZWEITEN ELEMENT EINER INSBESONDERE FLÜSSIGKEITSFÜHRENDEN EINRICHTUNG**
CONNECTING ARRANGEMENT FOR CONNECTING A FIRST ELEMENT TO A SECOND ELEMENT OF A DEVICE PARTICULARLY CONDUCTING LIQUIDS
DISPOSITIF D'ASSEMBLAGE POUR RELIER UN PREMIER ÉLÉMENT AVEC UN SECOND ÉLÉMENT D'UN DISPOSITIF ACHEMINANT EN PARTICULIER UN LIQUIDE

(30) Priorität: 31.01.2007 DE 102007004718
(43) Veröffentlichungstag der Anmeldung: 11.11.2009
(73) Patentinhaber: Danfoss A/S, 6430 Nordborg (DK)
(72) Erfinder: GARM, Fester, DK-8600 Silkeborg (DK)
(74) Vertreter: Knoblauch, Andreas
(86) Internationale Anmeldenummer: PCT/DK2008/000042
(87) Internationale Veröffentlichungsnummer: WO 2008/092453

(56) Entgegenhaltungen:
- EP-A1- 0 002 689
- EP-A1- 0 425 782
- WO-A-2004/090429
- DE-A1- 3 838 935
- FR-A- 2 130 020
- GB-A- 330 115
- NL-A- 6 804 580
- US-A1- 2007 018 132

## Beschreibung

Die Erfindung betrifft eine Verbindungsanordnung zum Verbinden eines ersten Elements mit einem zweiten Element einer Einrichtung, wobei das erste Element ein erstes Gewinde und das zweite Element ein zweites Gewinde aufweist und beide Elemente durch ein Verbindungselement miteinander verbunden sind, das mit dem ersten Gewinde und dem zweiten Gewinde in Eingriff steht.

Die Erfindung wird im folgenden anhand einer Heizkörperanordnung beschrieben, an der ein Ventilgehäuse befestigt werden soll. Das Ventilgehäuse bildet hierbei das erste Element und der Heizkörper das zweite Element.

Eine Möglichkeit zur Verbindung des Ventilgehäuses mit dem Heizkörper besteht darin, das Ventilgehäuse mit einem Gewindestutzen auszubilden und dann das Ventilgehäuse so zu drehen, das der Gewindestutzen in ein Innengewinde im Heizkörper eingeschraubt wird. Wenn man vermeiden möchte, das entsprechende Gewinde am Ventilgehäuse unmittelbar auszubilden, dann kann man das Gewinde auch an einem Verbindungselement ausbilden, das vor dem Befestigen des Ventilgehäuses am Heizkörper in das Ventilgehäuse eingeschraubt wird. Diese Art der Befestigung hat aber den Nachteil, dass man zum Befestigen des Ventilgehäuses am Heizkörper das gesamte Ventilgehäuse drehen muss. Da man eine flüssigkeitsdichte Verbindung erzeugen möchte, muss das Ventilgehäuse mit einer gewissen Kraft gegen den Heizkörper gespannt werden. Dies gilt auch dann, wenn man eine Dichtung zwischen dem Heizkörper und dem Ventilgehäuse anordnet. Allerdings ist es dabei schwierig, das Ventilgehäuse dann in einer gewünschten Stellung zum Heizkörper auszurichten.

Als nächstliegender Stand der Technik wird EP 0 425 782 angesehen und offenbart ein Verbindungsanordnung mit der Merkmalen des Oberbegriffs des Anspruchs 1.

Eine derartige Verbindungsanordnung ist beispielsweise aus US 2007/00118132 A1 bekannt. Dieses Dokument betrifft eine Verbindungsanordnung zum Verbinden eines ersten Elements mit einem zweiten Element vermittels eines Verbindungselementes. Die Verbindungsanordnung weist dabei ein Verbindungselement mit einer Öffnung mit einem ersten Innengewinde und einem gegenüberliegenden zweiten Innengewinde auf. Die beiden Innengewinde haben dabei unterschiedliche Steigungen. Zum Verbinden des ersten mit dem zweiten Element kann das Verbindungselement durch Rotation vom ersten Element ab- und auf das zweite Element aufgeschraubt werden, wodurch beide Elemente aufeinander zugezogen und verbunden werden.

GB 330 115 betrifft ein Verbindungselement für Baugerüste. Hierbei wird ein Zapfen mit einem Außengewinde an einem Ende eines Rohres durch Verschrauben mit einem Innengewinde fixiert. An seinem anderen Ende weist der Zapfen eine helixförmige Nut auf, die beim Verbinden des ersten und zweiten Rohres mit korrespondierenden helixförmigen Vertiefungen im zweiten Rohr in Eingriff gebracht werden. Das Verbinden der beiden Rohre erfolgt durch Drehen der Rohre.

FR 2 130 020 zeigt eine Verbindungsanordnung mit einem ersten Element und einem zweiten Element, die jeweils rohrförmig ausgebildet sind und ein Innengewinde aufweisen. Die Verbindung beider Elemente geschieht über ein Verbindungselement mit einem ersten und zweiten Außengewinde, die gegenläufige Steigungen aufweisen. Das Verbinden beider Elemente erfolgt dadurch, dass das Verbindungselement aus dem ersten Element in das zweite Element hineingeschraubt wird.

WO 2004/090429 A1 betrifft eine hydraulische Verbindungsanordnung mit einem rohrförmigen Verbindungselement, das ein durchgehendes Außengewinde aufweist. Auf dieses Verbindungselement ist ein Befestigungselement und ein Verbinder aufschraubbar. Diese werden dabei von der gleichen Seite auf das Verbindungselement aufgeschraubt.

Die Verwendung von Gewindedichtmitteln, beispielsweise einem Teflon-Band oder von Hanf, erlaubt zwar eine Abdichtung und eine in gewissen Grenzen frei wählbare Ausrichtung. Die Verwendung von Gewindedichtmitteln macht jedoch die Montage umständlich und führt in der Regel dazu, dass ein optisch störender Spalt zwischen dem Ventil und dem Heizkörper verbleibt.

Der Erfindung liegt die Aufgabe zugrunde, die Verbindung zwischen zwei Elementen einer insbesondere flüssigkeitsführenden Einrichtung auf einfache Weise herzustellen.

Diese Aufgabe wird bei einer Verbindungsanordnung der eingangs genannten Art dadurch gelöst, dass das erste Gewinde eine geringere Steigung als das zweite Gewinde aufweist und das Verbindungselement zur Verbindung mit dem zweiten Element aus dem ersten Element heraus und in das zweite Element hinein schraubbar ist, wobei das Verbindungselement als Rohrelement ausgebildet ist.

Mit dieser Ausgestaltung ist es auf einfache Weise möglich, durch Verschrauben des Verbindungselements eine Verspannung zwischen dem ersten Element und dem zweiten Element zu erzeugen. Wenn beispielsweise das erste Gewinde eine Steigung von x mm/Umdrehung aufweist und das zweite Gewinde eine Steigung von y mm/Umdrehung aufweist, dann nähern sich die beiden Elemente bei jeder Umdrehung des Verbindungselements um eine Stecke von (y-x) mm aneinander an. Man kann daher das Verbindungselement vor der Montage um eine kleine Strecke aus dem ersten Element herausschrauben, so dass man das Verbindungselement leicht und kontrolliert mit dem zweiten Element in Eingriff bringen kann. Wenn dann das Verbindungselement gedreht wird, dann zieht es die beiden Elemente aufeinander zu. Dabei wird eine mechanische Stabilität und eine Dichte gewährleistet, obwohl das Drehmoment wesentlich kleiner sein kann, als man es normalerweise zum Herstellen einer derart dichten Verbindung benötigt.

Das Verbindungselement ist auch in der Lage, Abweichungen in der Flucht zwischen dem ersten und dem zweiten Element aufzunehmen, wenn diese eine vorgegebene Größe nicht überschreiten. Das Verbindungselement ist als Rohrelement ausgebildet, so dass es einen Durchgangskanal aufweist.

Hierbei ist bevorzugt, dass das erste Gewinde als metrisches Gewinde und das zweite Gewinde als Zoll-Gewinde ausgebildet ist. Durch das Gegenüberstellen der beiden Gewindearten lassen sich zwar Gewindepaare finden, die etwa die gleiche Grösse haben. Die Steigungen bei metrischen Gewinden und bei Zoll-Gewinden sind jedoch etwas unterschiedlich, so dass man mit herkömmlichen Werkzeugen die Gewinde so einstellen kann, dass sie unterschiedliche Steigungen haben.

Vorzugsweise weist das Verbindungselement in seinem Inneren eine Drehmoment-Angriffsfläche auf. Dies ist möglich, da das Verbindungselement als Rohrelement ausgebildet ist. Man kann dann die Verbindung zwischen den beiden Elementen sozusagen unsichtbar gestalten, weil man das Verbindungselement nach dem Verspannen der beiden Elemente miteinander nicht mehr sieht. Es ist hierzu lediglich erforderlich, durch eines der beiden Elemente auf das Verbindungselement zuzugreifen. Wenn das erste Element beispielsweise als Ventilgehäuse ausgebildet ist, dann ist dies aber in der Regel ohne Schwierigkeiten möglich, weil man nach dem Entfernen eines Ventileinsatzes oder vor dem Einsetzen dieses Ventileinsatzes ohnehin Zugriff auf das Innere des Ventilgehäuses hat.

Alternativ oder zusätzlich dazu kann das Verbindungselement an mindestens einer seiner Stirnseiten eine Drehmoment-Angriffsfläche aufweisen. Auch in diesem Fall kann man das Verbindungselement in den Elementen verstecken, so dass man es nach dem Herstellen der Verbindung nicht mehr sieht.

Hierbei ist bevorzugt, dass die beiden Elemente unmittelbar aneinander zur Anlage kommen. Wenn das Verbindungselement oft genug gedreht worden ist, dann erzeugt es eine gewisse Spannung, die die beiden Elemente in Anlage miteinander hält.

Hierbei ist besonders bevorzugt, dass eine Dichtung zwischen den beiden Elementen angeordnet ist. Diese Dichtung wird durch die vom Verbindungselement erzeugte Spannung komprimiert und dichtet dann flüssigkeitsdicht nach außen ab.

Alternativ dazu kann das Verbindungselement mit einem Betätigungselement drehfest und axial beweglich verbunden sein. Mit Hilfe des Betätigungselements kann man dann das Verbindungselement von außen drehen. Das Betätigungselement wird dann zwischen den beiden Elementen eingespannt. Da das Verbindungselement im Betätigungselement axial beweglich ist, kann man es trotz der Fixierung des Betätigungselements zwischen den beiden Elementen aus dem ersten Element heraus und in das zweite Element hinein schrauben.

Vorzugsweise ist hierbei das Betätigungselement mit Wälzelementen am ersten Element abgestützt. Die Wälzelemente können beispielsweise durch Kugeln gebildet sein, wie sie aus kleinen Kugellagern bekannt sind. Mit dieser Ausgestaltung ist es möglich, das aufgebrachte Drehmoment fast vollständig zum Verspannen der beiden Elemente gegeneinander zu verwenden. Die Reibung zwischen dem Betätigungselement und dem ersten Element wird nämlich sehr klein gehalten. In diesem Fall ist es unter Umständen sogar möglich, dass man das Betätigungselement ohne Werkzeug dreht.

Vorzugsweise weist das Betätigungselement eine Werkzeug-Angriffsfläche auf. An der Werkzeug-Angriffsfläche kann man mit einem geeigneten Werkzeug angreifen, um einen längeren Hebelarm zu erzeugen, mit dem man ein Drehmoment in das Betätigungselement einleitet. Ein derartiges Werkzeug kann eine Zange oder ein Schraubschlüssel sein. Die Werkzeug-Angriffsfläche kann beispielsweise als Sechskant ausgebildet sein.

Es ist jedoch bevorzugt, dass das Betätigungselement eine zylinderförmige Außenkontur aufweist und die Werkzeug-Angriffsfläche in mindestens einer Vertiefung ausgebildet ist. In diesem Fall kann man eine optische Störung durch das Betätigungselement klein halten. Das Betätigungselement fügt sich dann ohne größere Abweichungen in der Außenkontur zwischen dem ersten und dem zweiten Element ein.

Bevorzugterweise weist das Betätigungselement an seiner dem zweiten Element zugewandten Stirnseite eine Schneidkante auf. Wenn das Betätigungselement am zweiten Element zur Anlage kommt, dann kann die Schneidkante den Lack oder eine andere am zweiten Element vorhandene Beschichtung durchstoßen und mit dem eigentlichen Kernmaterial des zweiten Elements in Kontakt kommen. Eine Auswirkung hiervon ist, dass ein größeres Moment benötigt wird, um das Betätigungselement in Löserichtung zurückzudrehen. Eine weitere Folge ist, dass man eine metallische Verbindung zwischen dem Betätigungselement und dem zweiten Element erzeugt. Gegebenenfalls kann man mit dieser Ausgestaltung auch Dichtungen einsparen.

Bevorzugterweise ragt das Betätigungselement mit einer Keilfläche in das erste Element hinein. Wenn dann das erste Element und das zweite Element zusammen gespannt werden, dann wird das erste Element an der Keilfläche anliegen und dort verspannt, so dass auch gegenüber dem ersten Element ein erhöhtes Drehmoment notwendig ist, um das Betätigungselement zurückzudrehen. Ein Lösen der Verbindungsanordnung wird damit zuverlässig verhindert, wenn man nicht ein entsprechendes Werkzeug zur Verfügung hat.

Vorzugsweise ist zwischen dem Betätigungselement und dem zweiten Element eine Dichtung angeordnet. Diese Dichtung dichtet dann die Berührungszone zwischen dem Betätigungselement und dem zweiten Element ab, auch wenn das zweite Gewinde beziehungsweise eine Gewindepaarung, die unter Verwendung des zweiten Gewindes gebildet ist, nicht vollständig dicht ist.

Vorzugsweise ist zwischen dem Betätigungselement und dem ersten Element eine Dichtung angeordnet. Diese Dichtung dichtet zwischen dem Betätigungselement und dem ersten Element ab, auch wenn die Gewindepaarung, die mit Hilfe des ersten Gewindes erzeugt worden ist, nicht vollständig dicht ist.

Vorzugsweise weist das Betätigungselement abgerundete, radial nach innen ragende Vorsprünge auf, die in axial verlaufende Nuten am Umfang des Verbindungselements eingreifen. Mit dieser Ausbildung ist eine drehfeste Verbindung zwischen dem Verbindungselement und dem Betätigungselement sichergestellt. Gleichzeitig kann das Verbindungselement innerhalb des Betätigungselements axial verschoben werden.

Die Erfindung wird im folgenden anhand von bevorzugten Ausführungsbeispielen in Verbindung mit der Zeichnung beschrieben. Hierin zeigen:
- Fig. 1: zwei Elemente einer flüssigkeitsführenden Anordnung vor dem Verbinden,
- Fig. 2: die beiden Elemente beim Verbinden,
- Fig. 3: die beiden Elemente nach dem Verbinden,
- Fig. 4: eine abgewandelte Ausführungsform einer Verbindungsanordnung vor dem Verbinden,
- Fig. 5: die Anordnung nach Fig. 4 nach dem Verbinden,
- Fig. 6: eine Ausführungsform eines Betätigungselements,
- Fig. 7: eine abgewandelte Ausführungsform eines Betätigungselements und
- Fig. 8: eine weitere Ausführungsform einer Verbindungsanordnung.

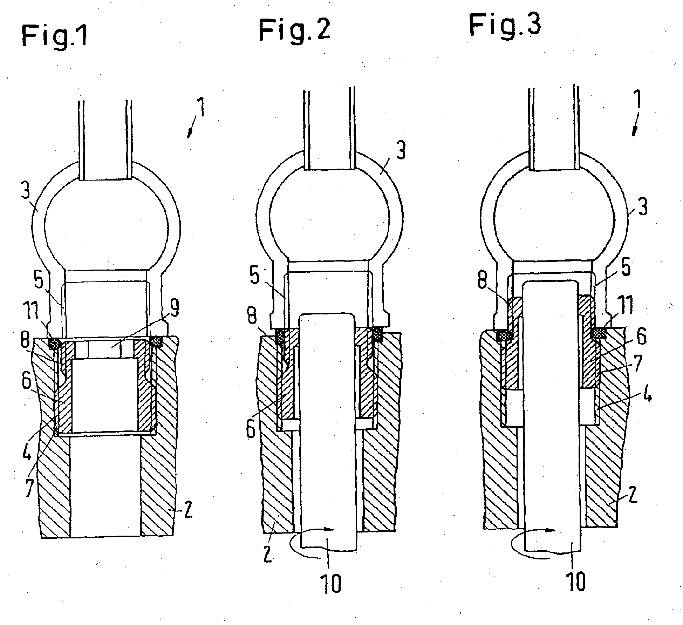

Fig. 1 zeigt in stark schematisierter Weise eine Verbindungsanordnung 1 zum Verbinden eines ersten Elements 2, hier eines Ventilgehäuses, mit einem zweiten Element 3, hier einem Heizkörper.

Das erste Element 2 weist ein erstes Gewinde 4 auf, beispielsweise ein metrisches Gewinde mit einer Steigung von 1,5 mm pro Umdrehung. Das erste Gewinde 4 ist als Innengewinde ausgebildet.

Das zweite Element 3 weist ein zweites Gewinde 5 auf, das ebenfalls als Innengewinde ausgebildet ist. Das zweite Gewinde 5 ist ein Zoll-Gewinde mit einer Steigung von 1,82 mm pro Umdrehung.

In das erste Element 2 ist ein Verbindungselement, das wegen seines Durchgangskanals im Folgenden auch als "Rohrelement" 6 bezeichnet wird, hinein geschraubt, das ein erstes Außengewinde 7 aufweist, das die gleiche Gewindesteigung wie das erste Gewinde 4 aufweist, nämlich 1,5 mm pro Umdrehung. Das Rohrelement 6 weist am anderen Ende ein zweites Außengewinde 8 auf, das die gleiche Gewindesteigung wie das zweite Gewinde 5 aufweist, nämlich 1,82 mm pro Umdrehung. Das zweite Außengewinde 8 hat allerdings einen kleineren Außendurchmesser als das erste Außengewinde 7, so dass das zweite Außengewinde 8 nicht mit dem ersten Gewinde 4 in Kontakt kommt, auch wenn, wie dargestellt, das Rohrelement 6 vollständig in das erste Element 2 hinein geschraubt worden ist.

Das erste Element 2 trägt an seiner dem zweiten Element 3 zugewandten Stirnseite eine Dichtung 11.

Das Rohrelement 6 weist eine Drehmoment-Angriffsfläche 9 auf, die im Bereich einer Stirnseite des Rohrelements 6 angeordnet ist. Mit dieser Drehmoment-Angriffsfläche 9 kann ein Werkzeug 10 in Eingriff gebracht werden, wie dies in Fig. 2 dargestellt ist. Bei der Drehmoment-Angriffsfläche kann es sich um einen Innensechskant handeln, so dass das Werkzeug 10 als Sechskant-Schlüssel ausgebildet sein kann.

Vor dem Verbinden des ersten Elements 2 mit dem zweiten Element 3 wird das Rohrelement 6 mit Hilfe des Werkzeugs 10 um einige Umdrehungen aus dem ersten Element 2 heraus geschraubt, so dass einige Gewindegänge des zweiten Außengewindes 8 freiliegen und in das zweite Gewinde 5 am zweiten Element 3 eingesetzt werden können. Es ist dabei unkritisch, wenn das erste Element 2 und das zweite Element 3 einen gewissen Abstand zueinander aufweisen.

Wenn das zweite Außengewinde 8 mit dem zweiten Gewinde 5 in Eingriff gekommen ist, dann kann man das Rohrelement 6, wie in Fig. 3 gezeigt, weiter in das zweite Element 3 hinein schrauben, wobei es lediglich erforderlich ist, das Werkzeug 10 zu drehen. Da das zweite Gewinde 5 eine größere Steigung als das erste Gewinde 4 aufweist, nämlich eine Differenz von 0,32 mm pro Umdrehung, nähern sich die beiden Elemente 2, 3 bei jeder Umdrehung des Rohrelements 6 um 0,32 mm an. Bei einem anfänglichen Abstand von 1,5 mm zwischen den beiden Elementen 2, 3, wie er beispielsweise in Fig. 2 dargestellt ist, liegen die beiden Elemente 2, 3 bereits nach weniger als fünf Umdrehungen des Rohrelements 6 an einander an, wobei die Dichtung 11 komprimiert wird. Wenn das Rohrelement 6 etwas weiter gedreht wird, dann werden das erste Element 2 und das zweite Element 3 gegeneinander verspannt. Diese Spannung kann man so groß machen, dass das Rohrelement 6 nur noch mit größeren Kräften gegenüber dem ersten Element 2 und dem zweiten Element 3 gedreht werden kann. Ansonsten ist die Reibung in den Gewindepaarungen 4, 7 und 5, 8 groß genug, um ein Verdrehen des Rohrelements 6 gegenüber dem ersten Element 2 oder dem zweiten Element 3 zu verhindern.

Zum Herstellen der Verbindung ist es bei diesem Ausführungsbeispiel erforderlich, in das Innere des zweiten Elements 3 mit dem Werkzeug 10 eingreifen zu können. Wenn das erste Element 2 als Ventilgehäuse ausgebildet ist, dann ist ein derartiger Eingriff in der Regel möglich, bevor ein Ventileinsatz im Ventilgehäuse montiert wird.

Später ist dann durch das Rohrelement 6 ein Flüssigkeitsstrom vom zweiten Element 3 in das erste Element 2 oder umgekehrt möglich.

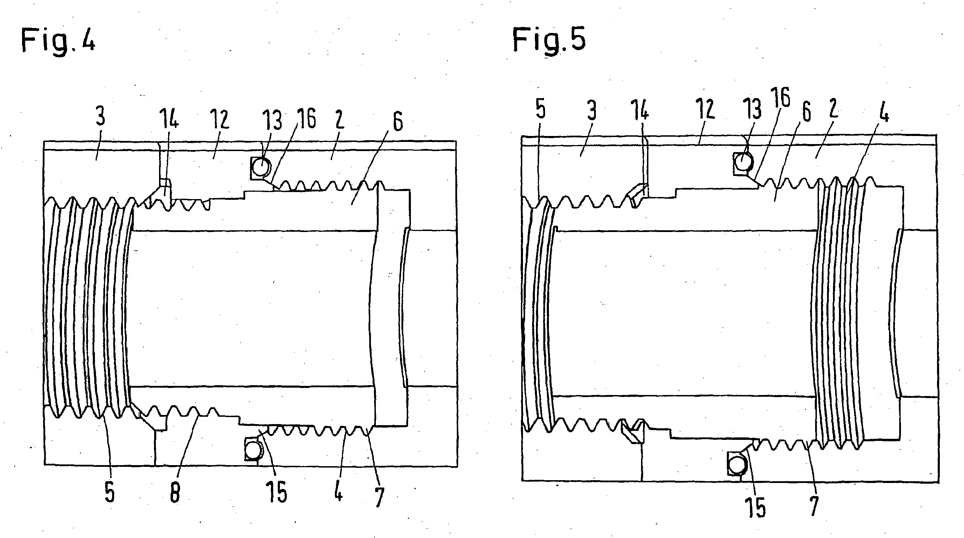

Die Fig. 4 und 5 zeigen eine abgewandelte Ausgestaltung, bei der gleiche Elemente mit den gleichen Bezugszeichen wie in den Fig. 1 bis 3 versehen sind. Diese Ausführungsform ist für Fälle vorgesehen, in denen das Rohrelement 6 nicht durch eins der beiden Elemente 2, 3 hindurch zugänglich ist.

Das Rohrelement 6 ist mit einem Betätigungselement 12 drehfest verbunden. Allerdings kann das Rohrelement 6 im Betätigungselement 12 axial verschoben werden. Wenn also das Betätigungselement 12 gedreht wird, dann wird auch das Rohrelement 6 gedreht und wandert aus dem ersten Element 2 heraus und in das zweite Element 3 hinein. Die Lage des Betätigungselements 12 beispielsweise in Bezug auf das erste Element 2 bleibt jedoch unverändert. Man kann sogar vorsehen, dass das Betätigungselement 12 unverlierbar am zweiten Element 2 gehalten ist, obgleich dies nicht notwendig ist.

Zwischen dem Betätigungselement 12 und dem zweiten Element 3 ist eine Dichtung 13 angeordnet, die beispielsweise als O-Ring ausgebildet sein kann. Zwischen dem Betätigungselement 12 und dem zweiten Element 3 ist ebenfalls eine Dichtung 14 angeordnet, die ebenfalls durch eine Ringdichtung gebildet sein kann.

Das Betätigungselement 12 weist eine Keilfläche 15 auf, die beispielsweise als Abschnitt einer Konusmantelfläche ausgebildet ist. Diese Keilfläche 15 ragt in das erste Element 2 hinein und liegt dort an einer entsprechend abgeschrägten Gegenfläche 16 an.

Die Funktion ist im Prinzip die gleiche wie bei der Ausführungsform nach den Fig. 1 bis Fig. 3. Vor dem Verbinden der beiden Elemente 2, 3 wird das Rohrelement durch Drehen am Betätigungselement 12 etwas aus dem ersten Element 2 heraus geschraubt, und zwar so, dass einige Gewindegänge aus dem Betätigungselement 12 vorstehen. Mit diesen Gewindegängen wird das zweite Außengewinde 8 mit dem zweiten Gewinde 5 am zweiten Element 3 in Eingriff gebracht. Durch weiteres Drehen am Betätigungselement 12 wird das Rohrelement 6 weiter aus dem ersten Element 2 heraus und weiter in das zweite Element 3 hinein geschraubt. Auch hier gibt es wieder eine Differenz in den Steigungen der beiden Gewindepaarungen 4, 7 bzw. 5, 8, die beispielsweise ebenfalls 0,32 mm pro Umdrehung betragen kann. Dementsprechend nähern sich die beiden Elemente 2, 3 bei jeder Umdrehung des Betätigungselements 12 um eine Strecke von 0,32 mm aneinander an. Dies führt dann dazu, dass das Betätigungselement 12 zwischen den beiden Elementen 2, 3 eingespannt wird, so dass eine weitere Drehung des Betätigungselements 12 nicht möglich ist, ohne dass man größere Kräfte aufbringt, für die aber ein Werkzeug erforderlich wäre. Dementsprechend ist, nachdem das Betätigungselement 12 oft genug gedreht worden ist, eine feste und dichte Verbindung zwischen den beiden Elementen 2, 3 geschaffen worden.

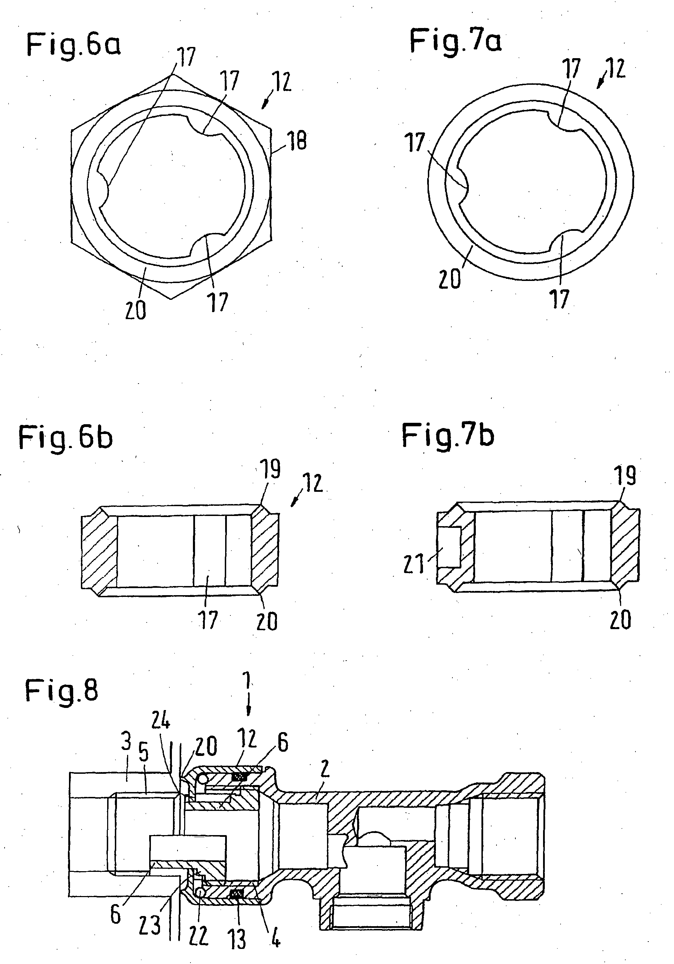

Fig. 6 zeigt ein Beispiel, wie ein Betätigungselement 12 ausgebildet sein kann. Wie aus den Fig. 4 und 5 zu erkennen ist, umgibt das Betätigungselement 12 das Rohrelement 6. Das Betätigungselement 12 weist mehrere radial nach innen ragende Vorsprünge 17 auf. Diese Vorsprünge sind abgerundet. Die Vorsprünge 17 ragen in axial verlaufende Nuten auf der Außenseite des Rohrelements 6 hinein. Die Vorsprünge können ein Drehmoment vom Betätigungselement 12 auf das Rohrelement 6 übertragen. Sie erlauben aufgrund des Zusammenwirkens mit den axial verlaufenden Nuten aber eine axiale Bewegung des Rohrelements 6 gegenüber dem Betätigungselement 12.

Das Betätigungselement 12 weist eine Drehmoment-Angriffsfläche 18 auf, beispielsweise in Form eines Sechskants.

Das Betätigungselement 12 weist an seinen beiden Stirnseiten Schneidkanten 19, 20 auf, die jeweils in das erste Element 2 beziehungsweise das zweite Element 3 eindringen, wenn die beiden Elemente 2, 3 durch die Drehung des Betätigungselements 12 weit genug aufeinander zu bewegt worden sind. Die Schneidkanten 19, 20 dringen dann durch eine Lackschicht oder eine andere Beschichtung an den beiden Elementen 2, 3 hindurch. Dadurch wird die Reibung erhöht, so dass ein versehentliches Lösen der Verbindungsanordnung erschwert wird. Darüber hinaus trägt eine derartige Schneidkante 19, 20 auch zu einer Verbesserung der Dichtigkeit der Verbindung bei.

Fig. 7 zeigt eine abgewandelte Ausgestaltung, bei der gleiche Elemente wie in Fig. 6 mit den gleichen Bezugszeichen versehen sind. In diesem Fall hat das Betätigungselement eine zylinderförmige Außenkontur, wobei diese Kontur vorzugsweise mit der Kontur der beiden Elemente 2, 3 übereinstimmt. Das Rohrelement kann dann genutzt werden, um sozusagen eine naht- oder übergangslose Außenkontur der Verbindungsanordnung zu erzeugen. In der Außenkontur ist allerdings mindestens eine Vertiefung 21 vorgesehen, vorzugsweise aber mehrere derartige Vertiefungen 21, so dass man auch hier mit einem Werkzeug angreifen kann, um das Betätigungselement 12 zu verdrehen.

Fig. 8 zeigt eine weiter abgewandelte Ausgestaltung, bei der Elemente, die denen der Fig. 1 bis 5 entsprechen, mit den gleichen Bezugszeichen versehen sind.

Das Betätigungselement 12 ist am ersten Element 2 gelagert, und zwar unter Zwischenschaltung von Kugeln 22 oder ähnlichen Wälzkörpern. Die Kugeln 22 nehmen eine axial wirkende Kraft auf, die beim Verspannen zwischen dem Betätigungselement 12 und dem ersten Element 2 auftreten könnte. Dementsprechend kann das Drehmoment, das man auf das Betätigungselement 12 aufbringt, praktisch vollständig genutzt werden, um das Rohrelement 6 aus dem ersten Element 2 heraus und in das zweite Element 3 hinein zu schrauben. Das Rohrelement 6 ist in der oberen Hälfte der Fig. 8 in zurückgezogener Position und in der unteren Hälfte in ausgefahrener Position dargestellt.

Das Betätigungselement 12 ist hier becherartig ausgebildet und umgreift das erste Element 2 auf einem Teil seiner axialen Länge. Die Dichtung 13 ist hier als Umfangsdichtung zwischen dem Betätigungselement 12 und dem ersten Element 2 ausgebildet. Ein Vorsprung 23 am Rohrelement 6 kommt in der in Fig. 8 unten dargestellten Endlage zur Anlage an eine Bodenwand 24 des Betätigungselements 12. Wenn das Rohrelement 6 weit genug aus dem ersten Element 2 heraus und in das zweite Element 3 hinein geschraubt worden ist, dann liegen aufgrund der Steigungsunterschiede der Gewinde 4, 5 die beiden Elemente 2, 3 mit einer gewissen Spannung aneinander an. Mit dieser Spannung drückt auch die Bodenwand 24 des Betätigungselements 12 auf das Rohrelement 6, so dass hier eine erhebliche Reibung erzeugt wird, die verhindert, dass die Verbindungsanordnung 1 sich versehentlich löst.

## Patentansprüche

1. Verbindungsanordnung (1) zum Verbinden eines ersten Elements (2) mit einem zweiten Element (3) einer Einrichtung, wobei das erste Element (2) ein erstes Gewinde (4) und das zweite Element (3) ein zweites Gewinde (5) aufweist und beide Elemente (2, 3) durch ein Verbindungselement (6) miteinander verbunden sind, das mit dem ersten Gewinde (4) und dem zweiten Gewinde (5) in Eingriff steht, wobei das erste Gewinde (4) eine geringere Steigung als das zweite Gewinde (5) aufweist und das Verbindungselement (6) zur Verbindung mit dem zweiten Element (3) aus dem ersten Element (2) heraus und in das zweite Element (3) hinein schraubbar ist, wobei das Verbindungselement (6) als Rohrelement ausgebildet ist, **dadurch gekennzeichnet, dass** das Verbindungselement mit einem Betätigungselement (12) drehfest und axial beweglich verbunden ist.

2. Verbindungsanordnung nach Anspruch 1, **dadurch gekennzeichnet, dass** das erste Gewinde (4) als metrisches Gewinde und das zweite Gewinde (5) als Zoll-Gewinde ausgebildet ist.

3. Verbindungsanordnung nach Anspruch 1 oder 2, **dadurch gekennzeichnet, dass** das Verbindungselement (6) in seinem Inneren eine Drehmoment-Angriffsfläche (9) aufweist.

4. Verbindungsanordnung nach einem der Ansprüche 1 bis 3, **dadurch gekennzeichnet, dass** das Verbindungselement (6) an mindesten einer seiner Stirnseiten eine Drehmoment-Angriffsfläche (9) aufweist.

5. Verbindungsanordnung nach einem der Ansprüche 1 bis 4, **dadurch gekennzeichnet, dass** die beiden Elemente (2, 3) unmittelbar aneinander zur Anlage kommen.

6. Verbindungsanordnung nach Anspruch 5, **dadurch gekennzeichnet, dass** eine Dichtung (11) zwischen den beiden Elementen (2, 3) angeordnet ist.

7. Verbindungsanordnung nach Anspruch 1, **dadurch gekennzeichnet, dass** das Betätigungselement (12) mit Wälzelementen (22) am ersten Element (2) abgestützt ist.

8. Verbindungsanordnung nach Anspruch 1 oder 7, **dadurch gekennzeichnet, dass** das Betätigungselement (12) eine Werkzeug-Angriffsfläche (18) aufweist.

9. Verbindungsanordnung nach Anspruch 8, **dadurch gekennzeichnet, dass** das Betätigungselement (12) eine zylinderförmige Außenkontur aufweist und die Werkzeug-Angriffsfläche in mindestens einer Vertiefung (21) ausgebildet ist.

10. Verbindungsanordnung nach einem der Ansprüche 1 oder 7 bis 9, **dadurch gekennzeichnet, dass** das Betätigungselement (12) an seiner dem zweiten Element (3) zugewandten Stirnseite eine Schneidkante (19, 20) aufweist.

11. Verbindungsanordnung nach einem der Ansprüche 1 oder 7 bis 9, **dadurch gekennzeichnet, dass** das Betätigungselement (12) mit einer Keilfläche (15) in das erste Element (2) hineinragt.

12. Verbindungsanordnung nach einem der Ansprüche 1 oder 7 bis 11, **dadurch gekennzeichnet, dass** zwischen dem Betätigungselement (12) und dem zweiten Element (3) eine Dichtung (14) angeordnet ist.

13. Verbindungsanordnung nach einem der Ansprüche 1 oder 7 bis 12, **dadurch gekennzeichnet, dass** zwischen dem Betätigungselement (12) und dem ersten Element (2) eine Dichtung (13) angeordnet ist.

14. Verbindungsanordnung nach einem der Ansprüche 1 oder 7 bis 13, **dadurch gekennzeichnet, dass** das Betätigungselement (12) abgerundete, radial nach innen ragende Vorsprünge (17, 23) aufweist, die axial verlaufende Nuten am Umfang des Verbindungselements (6) eingreifen.

## Claims

1. Connecting arrangement (1) for connecting a first element (2) to a second element (3) of a device, wherein the first element (2) has a first thread (4) and the second element (3) has a second thread (5) and both elements (2, 3) are connected together by a connecting element (6) which is in engagement with the first thread (4) and the second thread (5), wherein the first thread (4) has a smaller pitch than the second thread (5) and, in order to be connected to the second element (3), the connecting element (6) is screwable out of the first element (2) and into the second element (3), wherein the connecting element (6) is in the form of a tubular element, **characterized in that** the connecting element is connected to an actuating element (12) for co-rotation and in an axially moveable manner.

2. Connecting arrangement according to Claim 1, **characterized in that** the first thread (4) is configured as a metric thread and the second thread (5) as an inch thread.

3. Connecting arrangement according to Claim 1 or 2, **characterized in that** the connecting element (6) has a torque engagement surface (9) in its interior.

4. Connecting arrangement according to one of Claims 1 to 3, **characterized in that** the connecting element (6) has a torque engagement surface (9) on at least one of its end sides.

5. Connecting arrangement according to one of Claims 1 to 4, **characterized in that** the two elements (2, 3) come into direct abutment against one another.

6. Connecting arrangement according to Claim 5, **characterized in that** a seal (11) is arranged between the two elements (2, 3).

7. Connecting arrangement according to Claim 1, **characterized in that** the actuating element (12) is supported on the first element (2) by way of rolling elements (22).

8. Connecting arrangement according to Claim 1 or 7, **characterized in that** the actuating element (12) has a tool engagement surface (18).

9. Connecting arrangement according to Claim 8, **characterized in that** the actuating element (12) has a cylindrical external contour and the tool engagement surface is formed in at least one depression (21).

10. Connecting arrangement according to one of Claims 1 or 7 to 9, **characterized in that** the actuating element (12) has a cutting edge (19, 20) on its end side facing the second element (3).

11. Connecting arrangement according to one of Claims 1 or 7 to 9, **characterized in that** the actuating element (12) projects into the first element (2) by way of a wedge surface (15).

12. Connecting arrangement according to one of Claims 1 or 7 to 11, **characterized in that** a seal (14) is arranged between the actuating element (12) and the second element (3).

13. Connecting arrangement according to one of Claims 1 or 7 to 12, **characterized in that** a seal (13) is arranged between the actuating element (12) and the first element (2).

14. Connecting arrangement according to one of Claims 1 or 7 to 13, **characterized in that** the actuating element (12) has rounded protrusions (17, 23) that project radially inwardly and engage in axially extending grooves on the circumference of the connecting element (6).

## Revendications

1. Dispositif d'assemblage (1) pour relier un premier élément (2) avec un deuxième élément (3) d'un dispositif, dans lequel le premier élément (2) présente un premier filet (4) et le deuxième élément (3) présente un deuxième filet (5) et les deux éléments (2, 3) sont assemblés l'un à l'autre au moyen d'un élément d'assemblage (6), qui est en prise avec le premier filet (4) et avec le deuxième filet (5), dans lequel le premier filet (4) présente un pas plus petit que le deuxième filet (5) et l'élément d'assemblage (6) peut, pour l'assemblage avec le deuxième élément (3) être vissé hors du premier élément (2) et dans le deuxième élément (3), dans lequel l'élément d'assemblage (6) se présente sous la forme d'un élément tubulaire, **caractérisé en ce que** l'élément d'assemblage est relié de façon calée en rotation et mobile axialement avec un élément d'actionnement (12).

2. Dispositif d'assemblage selon la revendication 1, **caractérisé en ce que** le premier filet (4) est un filet métrique et le deuxième filet (5) est un filet au pouce.

3. Dispositif d'assemblage selon la revendication 1 ou 2, **caractérisé en ce que** l'élément d'assemblage (6) présente, à l'intérieur, une face d'application d'un couple de rotation (9).

4. Dispositif d'assemblage selon l'une quelconque des revendications 1 à 3, **caractérisé en ce que** l'élément d'assemblage (6) présente, sur au moins une de ses faces frontales, une face d'application d'un couple de rotation (9).

5. Dispositif d'assemblage selon l'une quelconque des revendications 1 à 4, **caractérisé en ce que** les deux éléments (2, 3) viennent s'appliquer directement l'un sur l'autre.

6. Dispositif d'assemblage selon la revendication 5, **caractérisé en ce qu'**un joint d'étanchéité (11) est disposé entre les deux éléments (2, 3).

7. Dispositif d'assemblage selon la revendication 1, **caractérisé en ce que** l'élément d'actionnement (12) est appuyé sur le premier élément (2) avec des éléments de roulement (22).

8. Dispositif d'assemblage selon la revendication 1 ou 7, **caractérisé en ce que** l'élément d'actionnement (12) présente une face d'application d'un outil (18).

9. Dispositif d'assemblage selon la revendication 8, **caractérisé en ce que** l'élément d'actionnement (12) présente un contour extérieur cylindrique et la face d'application d'un outil est formée dans au moins un creux (21).

10. Dispositif d'assemblage selon l'une quelconque des revendications 1 ou 7 à 9, **caractérisé en ce que** l'élément d'actionnement (12) présente une arête de coupe (19, 20) sur sa face frontale tournée vers le deuxième élément (3).

11. Dispositif d'assemblage selon l'une quelconque des revendications 1 ou 7 à 9, **caractérisé en ce que** l'élément d'actionnement (12) pénètre dans le premier élément (2) avec une face en forme de coin (15).

12. Dispositif d'assemblage selon l'une quelconque des revendications 1 ou 7 à 11, **caractérisé en ce qu'**un joint d'étanchéité (14) est disposé entre l'élément d'actionnement (12) et le deuxième élément (3).

13. Dispositif d'assemblage selon l'une quelconque des revendications 1 ou 7 à 12, **caractérisé en ce qu'**un joint d'étanchéité (13) est disposé entre l'élément d'actionnement (12) et le premier élément (2).

14. Dispositif d'assemblage selon l'une quelconque des revendications 1 ou 7 à 13, **caractérisé en ce que** l'élément d'actionnement (12) présente des protubérances arrondies (17, 23), saillantes radialement vers l'intérieur, qui s'engagent dans des rainures s'étendant axialement à la périphérie de l'élément d'assemblage (6).
